# FASCICULE DE BREVET EUROPEEN

(11) **EP 1 779 993 B1**
(45) Date de publication et mention de la délivrance du brevet: **04.03.2009**
(21) Numéro de dépôt: 05110049.3
(22) Date de dépôt: 26.10.2005
(51) Int. Cl.: B29C 49/48, B29C 49/78, B29C 49/12, B29C 49/18, B29C 49/06

(54) **Dispositif et procédé de fabrication d'un récipient thermoplastique par soufflage**
Vorrichtung sowie Verfahren zur Herstellung eines thermoplastischen Behälters durch Blasformen
Apparatus and method of manufacturing a thermoplastic container by blow moulding

(43) Date de publication de la demande: 02.05.2007
(73) Titulaire: Aisapack Holding SA, 1896 Vouvry (CH)
(72) Inventeur: Hitzig, Andreas, 1896 Vouvry (CH)
(74) Mandataire: Grosfillier, Philippe

(56) Documents cités:
- WO-A-99/50047
- US-A- 4 364 721
- US-A- 4 547 333
- PATENT ABSTRACTS OF JAPAN vol. 017, no. 300 (M-1426), 8 juin 1993 (1993-06-08) & JP 05 024099 A (DENKI KAGAKU KOGYO KK), 2 février 1993 (1993-02-02) -& DATABASE WPI Section Ch, Week 199310 Derwent Publications Ltd., London, GB; Class A32, AN 1993-079938 XP002373755 & JP 05 024099 A (DENKI KAGAKU KOGYO KK) 2 février 1993 (1993-02-02)

## Description

### Domaine de l'invention

La présente invention se situe dans le domaine de la fabrication de récipients thermoplastiques par soufflage.

Elle concerne en particulier la fabrication de bouteilles qui sont plus larges que hautes.

### Etat de la technique

Le soufflage de préformes en vue d'obtenir des récipients est une technique connue de longue date.

Un procédé couramment utilisé consiste à introduire dans la préforme un élément tubulaire, communément nommé tige d'étirage ou doigt, autour duquel le fluide de soufflage est introduit.

La présence d'une tige d'étirage dans les préformes permet notamment d'assurer un centrage de la préforme dans le moule. Cependant, elle peut occasionner certains inconvénients, p.ex. un risque de contact entre les parois de la préforme et la tige d'étirage lors du soufflage.

Le brevet américain US 4 490 327 décrit un dispositif de soufflage sans tige d'étirage. Dans cette configuration, le centrage de la préforme est assuré par une tige externe mobile dont la face supérieure se situe sous le fond de la préforme. Le brevet américain US 4 952 134 décrit également un dispositif de soufflage sans tige d'étirage. Les bouteilles fabriquées avec ce dispositif se caractérisent par un collerette disposée sur le fond. Afin de maintenir la collerette, le dispositif comporte un ensemble de tiges mobiles qui supportent la collerette.

La demande de brevet internationale WO 02/062549 A2 présente un dispositif avec doigt mais comprenant en outre un contre-doigt mobile dont la face supérieure s'appuie sur le fond de la préforme. Le déplacement du contre-doigt se produit consécutivement à la pression exercée par le doigt sur le fond de la préforme. La présence du contre-doigt dans le dispositif précité se justifie par le fait que l'on cherche exclusivement à fabriquer des containers asymétriques.

Le document JP 05 024099 A décrit un procéde et un dispositif selon les preambules des revendications 1 et 10.

Les procédés et dispositifs de l'état de la technique présentent cependant certaines inconvénients. Lors du soufflage de la préforme, suivant sa géométrie, la paroi latérale du récipient en formation peut contacter les parois du moule beaucoup plus rapidement que le fond du récipient. Le même problème peut se produire lorsque le récipient est plus large que haut. Dans ce cas, le fond contacte la paroi du moule beaucoup plus rapidement que la paroi latérale du récipient.

Cette absence de contact quasi simultané avec les parois du moule résulte en un récipient ayant des parois d'épaisseur inhomogène.

Il existe donc un besoin d'obtenir un contact quasi simultané de la paroi latérale et du fond du récipient avec les parois du moule.

Dans le présente texte, par "quasi simultané", il faut comprendre un très court intervalle de temps, typiquement inférieur à 50 ms et de préférence inférieur à 25 ms.

De même, par "soufflage", il faut comprendre à la fois indifféremment ce que l'on nomme "pré-soufflage", "soufflage à basse pression" ou "soufflage à haute pression". A titre d'exemple, on peut faire référence à du pré-soufflage ou à du soufflage à basse pression lorsque la pression est de l'ordre de 7 bar. Un soufflage à haute pression correspond plutôt à une pression de l'ordre de 18 bar ou plus.

### Résumé de l'invention

La présente invention offre une solution au problème précité.

A cet effet, elle concerne un procédé de fabrication d'un récipient thermoplastique par soufflage d'une préforme dans un moule, ledit récipient étant plus large que haut ou vice-versa et comprenant un goulot sur sa face supérieure, une paroi latérale et un fond, ledit procédé étant caractérisé par le fait que lors du soufflage, on utilise un organe mobile de retenue pour contrôler l'expansion du récipient selon sa direction de plus faible distance (hauteur ou largeur), le contrôle de l'expansion du récipient étant effectué de manière à ce que la paroi latérale et le fond du récipient contactent quasi simultanément les parois du moule.

En général, le récipient atteint sa forme définitive lors de la phase de pré-soufflage.

Il importe à ce stade de souligner que les organes mobiles décrits dans l'état de la technique sont adaptés uniquement pour assurer un centrage (voire un décentrage) du récipient lors de son expansion. En aucun cas, il ne permettent de contrôler l'expansion du récipient de manière à permettre un contact quasi simultané de sa paroi latérale et de son fond avec les parois du moule.

Selon un mode de réalisation, le procédé selon l'invention s'applique aux récipients possédant une symétrie axiale.

Avantageusement, le procédé selon l'invention s'applique à des récipients plus large que haut.

De préférence, la vitesse de l'organe mobile de retenue est déterminée en fonction de certains paramètres, p.ex. du débit de soufflage et de la géométrie du moule.

Selon un mode de réalisation, le déplacement de l'organe mobile de retenue débute lors de l'enclenchement du soufflage.

Avantageusement, précédemment au soufflage, l'organe mobile de retenue est en contact avec le fond de la préforme.

L'invention concerne également un dispositif pour la fabrication de récipients selon le procédé décrit précédemment. Le dispositif comprend un moule et des moyens de soufflage, le moule étant dimensionné pour la fabrication de récipients plus larges que haut ou vice-versa. Le dispositif se caractérise par le fait qu'il comprend un organe mobile de retenue disposé selon la direction de dimension la plus faible du moule (hauteur ou largeur) et des moyens de contrôle de déplacement dudit organe mobile de retenue, p.ex. un système de vérins, qui sont adaptés de manière à assurer un contact quasi-simultané de la paroi latérale et du fond du récipient avec les parois du moule.

De préférence, l'organe mobile comprend une extrémité libre qui est adaptée pour contacter une portion du fond du récipient. Avantageusement, cette portion se situe au centre du fond.

Selon un mode de réalisation particulièrement avantageux, le fond du récipient est convexe et comprend une géométrie qui est adaptée pour loger la partie supérieure, en général un goulot et un couvercle, d'un autre récipient. Une telle configuration permet un empilement compact et stable de plusieurs récipients.

Avantageusement, l'organe mobile de retenue est monté coulissant à travers le fond du moule.

De préférence, l'organe mobile de retenue se présente sous la forme d'une tige. L'organe mobile de retenue est conçu de manière à pouvoir retenir la préforme lors de son expansion.

### Description détaillée de l'invention

L'invention sera mieux comprise au moyen d'un exemple illustré sur les figures suivantes :
- La figure 1: présente un dispositif selon l'invention dans une première position où une préforme vient d'être introduite dans le moule (vue de coupe selon le plan de joint des deux demi-coquilles du moule).
- Les figures 2 à 11: présentent le dispositif de la figure 1 selon une vue perpendiculaire au plan de joint des deux demi-coquilles du moule, chaque figure illustrant une étape du procédé de fabrication d'un récipient.

La liste des références numériques utilisées sur les figures est reproduite ci-dessous
1. Récipient
2. Préforme
3a. Première demi-coquille de moule
3b. Deuxième demi-coquille de moule
4. Goulot
5. Face supérieure du récipient
6. Face latérale du récipient
7. Fond du récipient
8. Fond de moule
9. Tige de retenue
10. Système de contrôle du déplacement du fond de moule et de la tige de retenue
11. Extrémité libre du fond du moule
12. Partie centrale du fond de récipient
13. Extrémité libre de la tige de retenue
14. Face du moule correspondant au plan de joint

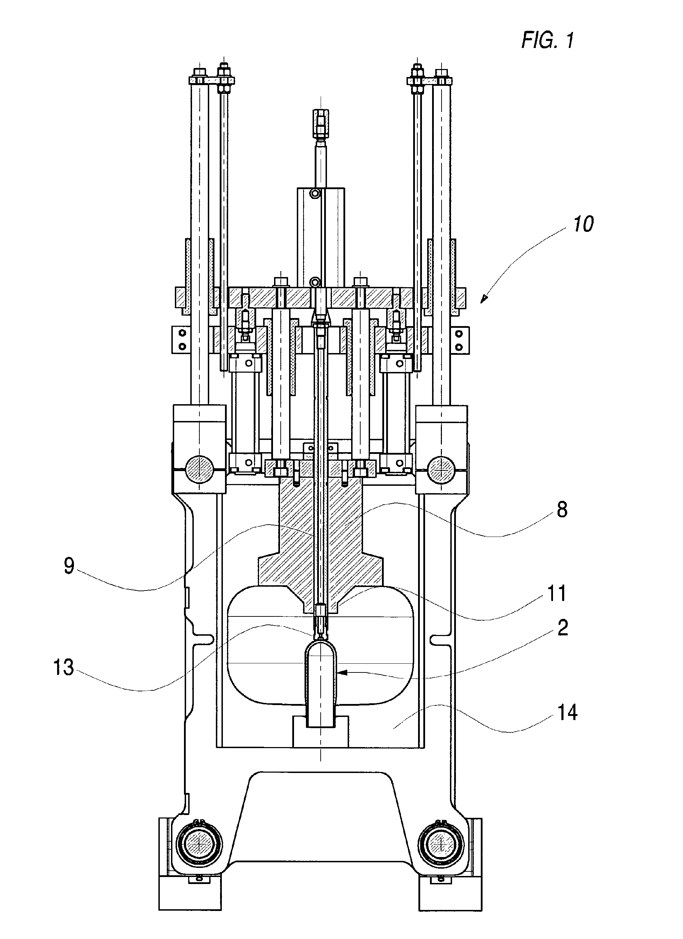

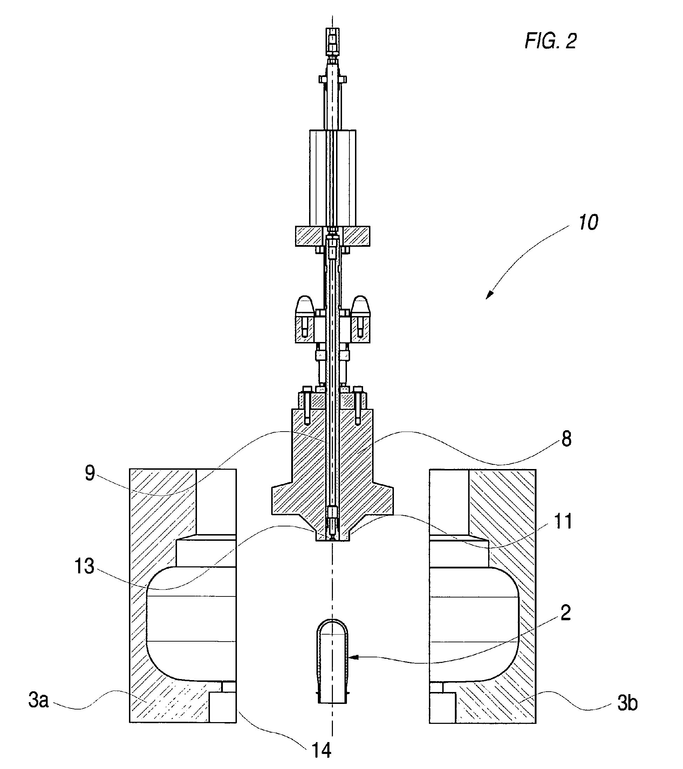

Le dispositif illustré sur la figure 1 comprend un moule fermé **14** à l'intérieur duquel se trouve une préforme **2.** Le moule est constitué de trois éléments (voir figures 2 et suivantes), à savoir une première demi-coquille **3a,** une deuxième demi-coquille **3b** et un fond **8.** Le fond **8** est disposé dans la partie supérieure du moule **3a, 3b, 8.** Son extrémité libre **11** est conçue pour former le fond du récipient obtenu par soufflage de la préforme **2.** Le fond du moule **8** peut se déplacer selon une direction verticale au moyen d'un système d'entraînement **10** constitué d'un ensemble de vérins. Une tige mobile de retenue **9** est montée coulissante à travers le fond du moule **8.** La tige **9** comporte une extrémité libre **13** adaptée pour contacter le fond de la préforme **2.** Des moyens d'acheminement d'air sous pression dans la préforme **2 ,** non-illustrés, sont disposés dans la partie inférieure du dispositif.

Dans une première phase (voir figure 2), la préforme **2** est positionnée, au moyen d'un mécanisme non-illustré connu en soi, alors que le moule **3a, 3b, 8** est en position ouverte.

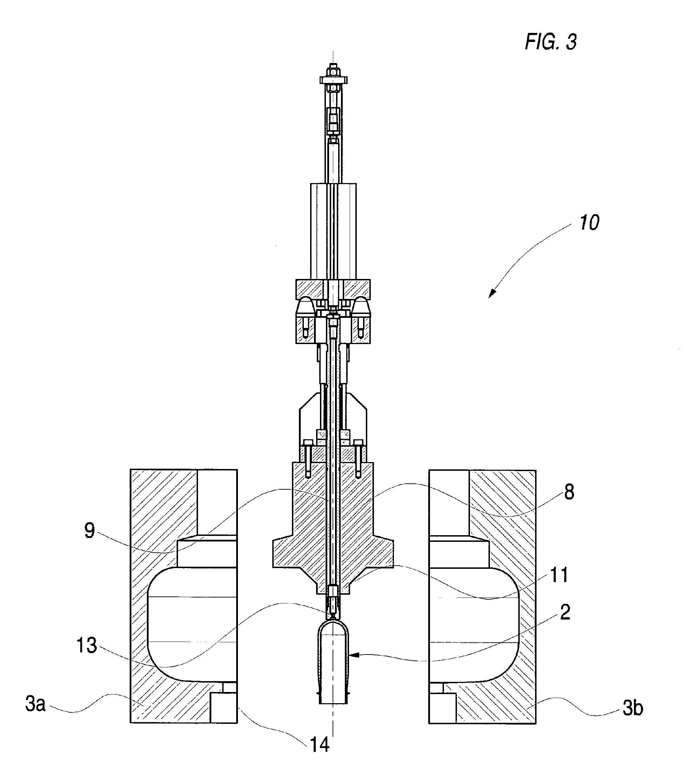

Dans une deuxième phase (voir figure 3), le fond du moule **8** est abaissé. Simultanément et consécutivement au déplacement du fond du moule **8,** la tige de retenue **9** coulisse dans le fond du moule **8** de manière à ce que son extrémité libre **13** contacte et retienne le fond de la préforme **2** préalablement au soufflage.

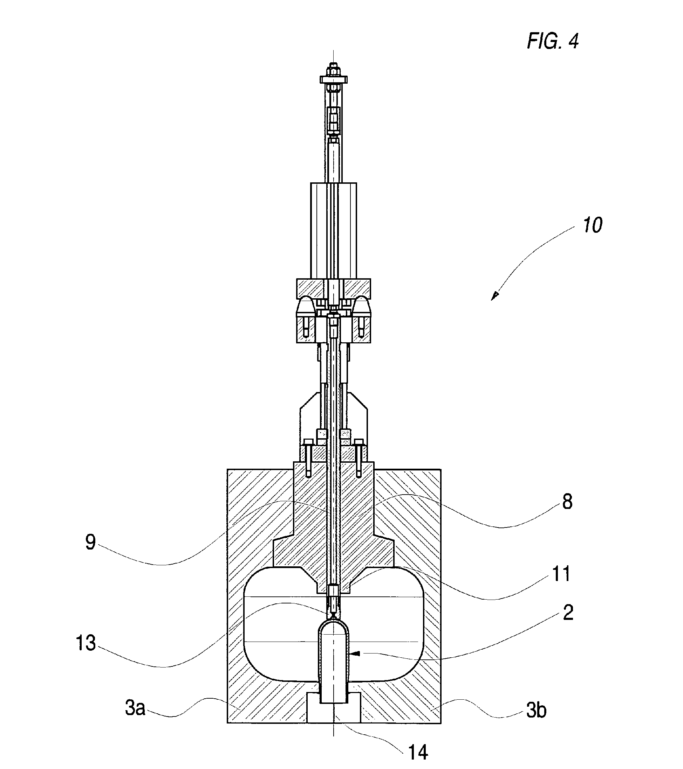

Dans une troisième phase (voir figure 4), le moule est fermé par rapprochement et emboîtement des trois éléments **3a, 3b, 8** qui le constituent.

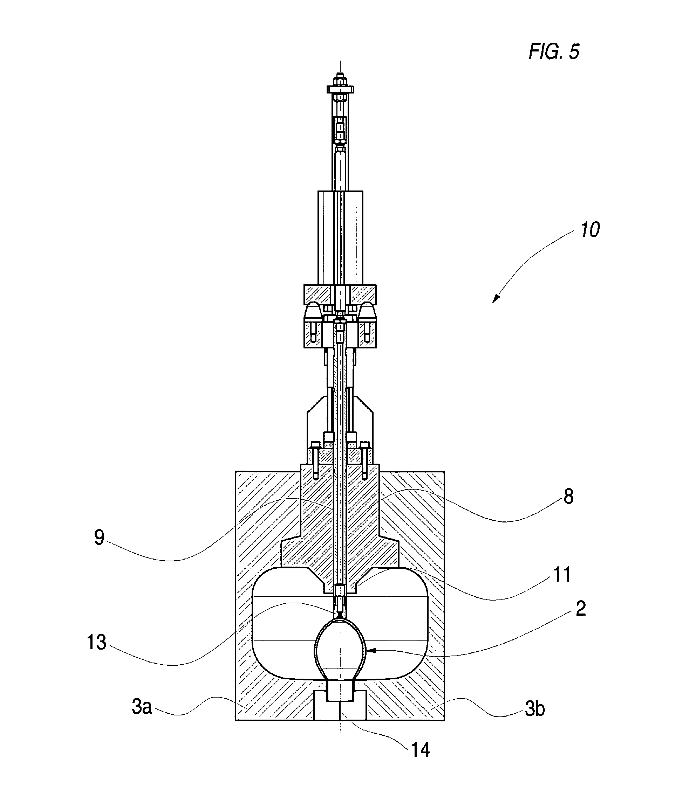

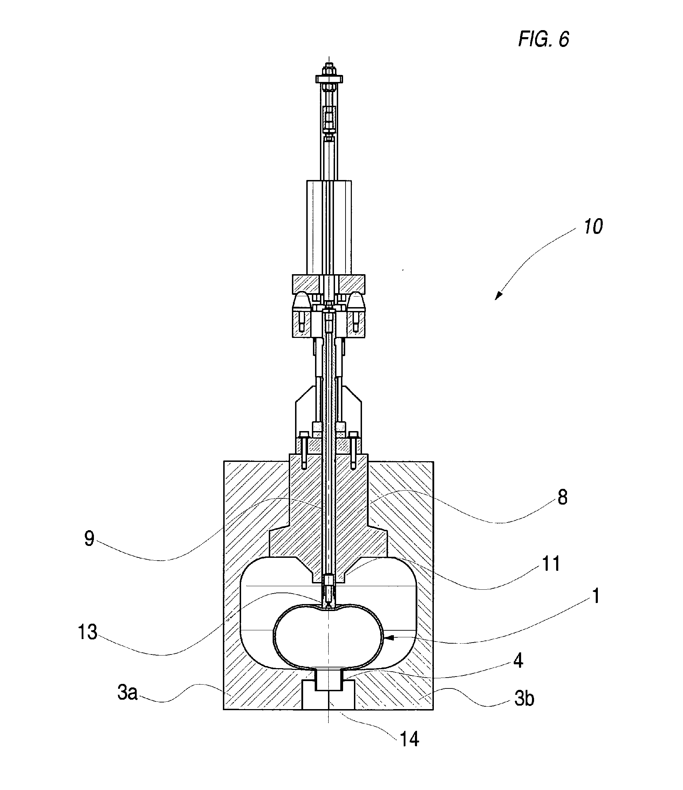

Dans une quatrième phase (voir figure 5), le soufflage est enclenché. Initialement, la tige de retenue **9** ne se déplace pas (voir figures 5 et 6), de sorte que l'expansion de la préforme **2** se produit essentiellement selon une direction latérale.

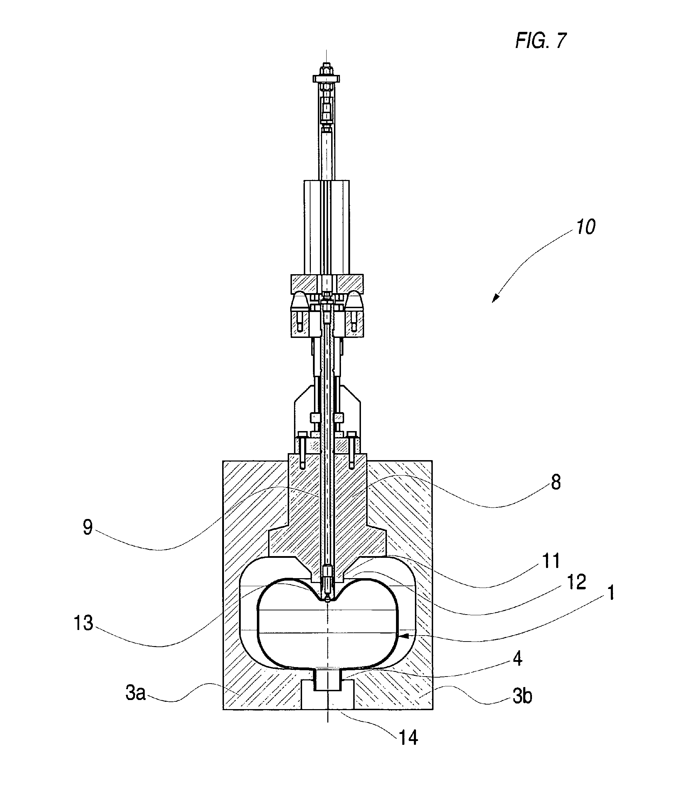

A partir d'un instant prédéfini (voir figure 7), déterminé en fonction des paramètres de soufflage et de la géométrie du moule **3,** la tige de retenue **9** se rétracte à l'intérieur du fond du moule **8,** autorisant de la sorte un déplacement du centre **12** du fond **7** du récipient **1** en direction du fond du moule **8.**

Selon une variante non-illustrée de l'invention, le déplacement de la tige de retenue **9** débute en même temps que l'enclenchement du soufflage.

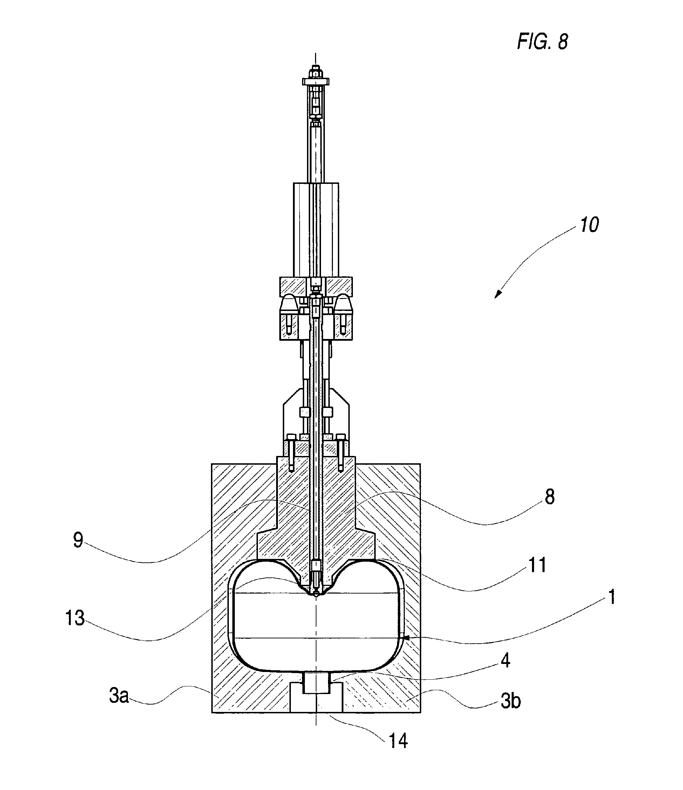

La figure **8** illustre une phase de soufflage où le récipient **1** est proche de sa forme définitive.

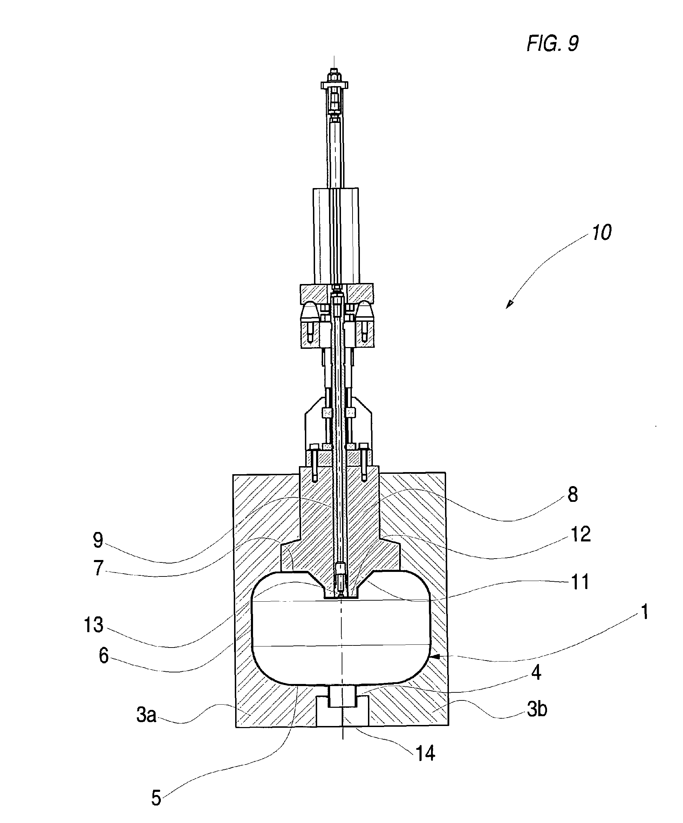

La figure 9 illustre la fin du soufflage où le récipient **1** a atteint sa forme définitive. Il convient de relever que l'intervalle de temps entre la position illustrée à la figure 8 et celle illustrée à la figure 9 est extrêmement court, dans tous les cas inférieur à 50 ms et préférablement inférieur à 25 ms, de sorte que le fond **7** et la paroi latérale **6** du récipient **1** entrent en contact avec les parois du moule **3a, 3b, 8** quasi simultanément.

Comme indiqué précédemment, la formation du récipient **1** se produit lors du pré-soufflage. Une fois celui-ci terminé (cf. figure 9), un soufflage à haute pression se produit.

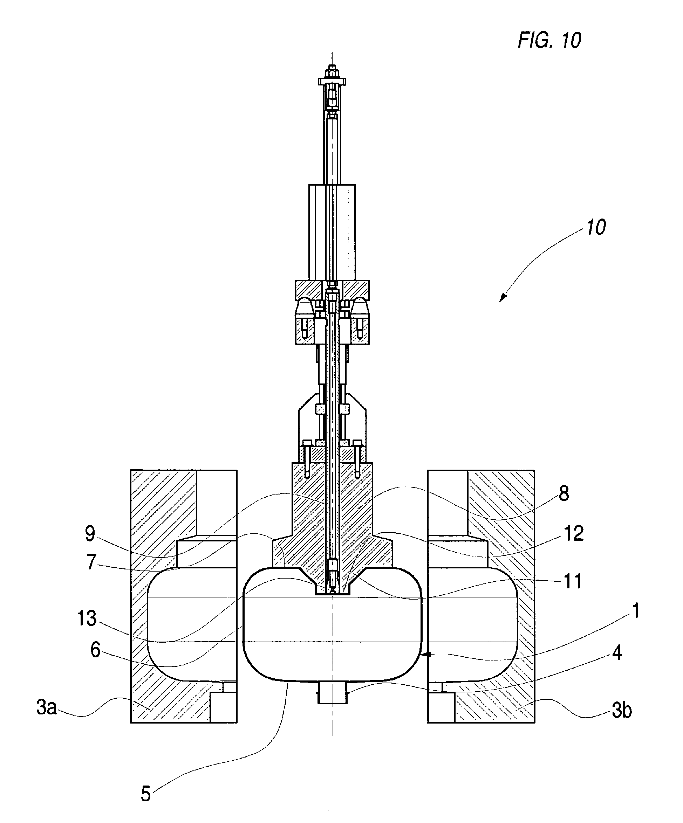

La figure 10 illustre l'ouverture des deux demi-coquilles du moule **3a** et **3b** en un instant où le soufflage à haute pression vient de cesser. Le fond du moule **8** est encore en contact avec le fond **7** du récipient **1.**

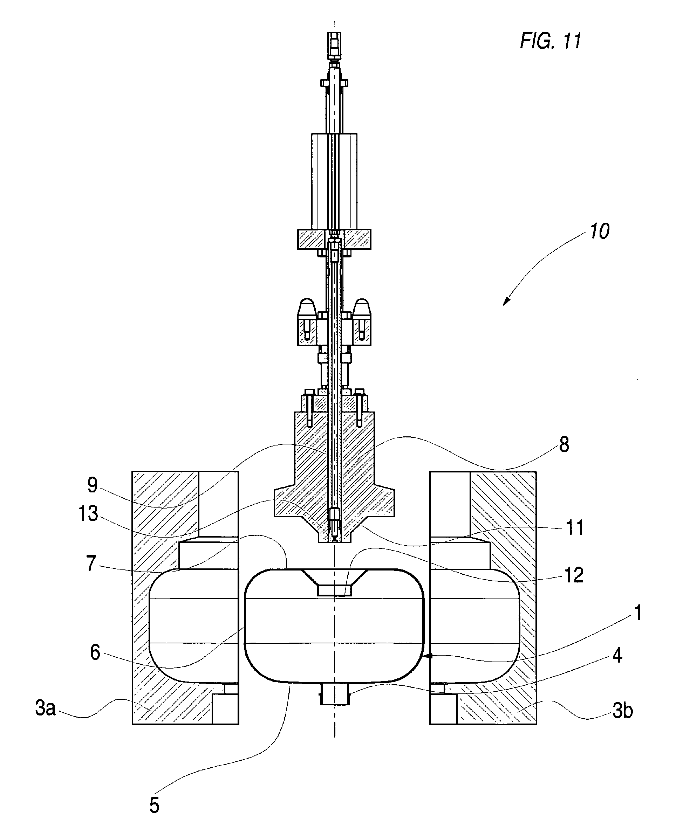

Enfin, la figure 11 illustre le dispositif en fin de cycle lorsque le moule **3a, 3b, 8** est complètement ouvert pour permettre le déchargement du récipient 1.

Pour faciliter l'éloignement entre le fond du moule **8** et le fond **7** du récipient **1,** une fois le soufflage à haute pression terminé, la tige de retenue **9** peut à nouveau coulisser en direction de l'intérieur du moule, son extrémité libre **13** faisant office de poussoir.

Selon une variante non-illustrée, le fond du moule 8 peut comporte un canal adapté pour laisser circuler de l'air sous pression, soit en direction du moule, soit en sens opposé. L'entrée d'air dans le moule, en fin de soufflage à haute pression, vise à remplacer la fonction de poussoir mécanique décrit précédemment.

A titre d'exemple non-limitatif de l'invention les caractéristiques fonctionnelles suivantes peuvent être utilisées avec le dispositif précité.
Pression de pré-soufflage : 7 bar
Pression de soufflage à haute pression : 18 bar
Durée d'un cycle de production de récipient : 5 secondes d'où une cadence de production d'environ 720 récipients/heure ou 12 récipients/minute.

### Déroulement d'un cycle de production de récipient :

- t = t₀: Début du cycle (cf. figure 4)
- t₀+ 20 ms: Enclenchement du pré-soufflage/soufflage à basse pression (7 bar) (cf. figure 5)
- t₀ + 30 ms: Début du déplacement (rétraction) de la tige de retenue (cf. figures 6 & 7)
- t₀ + 170 ms: Fin du déplacement de la tige de retenue (rétraction complète)
- t₀ + 670 ms: Fin du pré-soufflage/soufflage à basse pression, début du soufflage à haute pression (18 bar) (cf. figure 9)
- t₀ + 1840 ms: Fin du soufflage à haute pression, début du dégazage
- t₀ + 3040 ms: Fin du dégazage, ouverture du moule, démoulage du récipient (cf. figure 10)
- t₀ + 5000 ms: Fin du cycle, début du cycle suivant.

Il va de soi que l'invention ne se limite pas aux exemples et données fonctionnelles discutés dans la présente demande.

## Revendications

1. Procédé de fabrication d'un récipient thermoplastique (1) par soufflage d'une préforme (2) dans un moule comprenant une première demi-coquille (3a), une deuxième demi-coquille (3b) et un fond (8), ledit récipient (1) étant plus large que haut ou vice-versa et comprenant un goulot (4) sur sa face supérieure (5), une paroi latérale (6) et un fond (7), ledit procédé étant **caractérisé par le fait que** lors du soufflage, on utilise un organe mobile de retenue (9) pour contrôler l'expansion du récipient (1) selon sa direction de plus faible distance (hauteur ou largeur), le contrôle de l'expansion du récipient (1) étant effectué de manière à ce que sa paroi latérale (6) et son fond (7) contactent quasi simultanément les parois du moule (3a, 3b, 8).

2. Procédé de fabrication selon la revendication précédente où l'on utilise un récipient (1) plus large que haut.

3. Procédé de fabrication selon la revendication 1 ou 2 **caractérisé par le fait que** l'on détermine la vitesse de déplacement de l'organe mobile de retenue (9) en fonction du débit de soufflage et de la géométrie du moule (3).

4. Procédé de fabrication selon l'une quelconque des revendications précédentes **caractérisé par le fait que** l'on débute le déplacement de l'organe mobile de retenue (9) lors de l'enclenchement du soufflage.

5. Procédé de fabrication selon l'une quelconque des revendications précédentes **caractérisé par le fait que** précédemment au soufflage, l'organe mobile de retenue (9) est en contact avec le fond de la préforme (2).

6. Procédé selon la revendication précédente **caractérisé par le fait que** l'on maintient en permanence l'organe mobile de retenue (9) avec le fond de la préforme (2) ou du récipient (1) pendant toute la durée du soufflage.

7. Procédé de fabrication selon l'une quelconque des revendications précédentes **caractérisé par le fait que** l'on met l'organe mobile de retenue (9) en contact avec une portion (12) du fond (7) du récipient (1).

8. Procédé selon la revendication précédente **caractérisée par le fait que** ladite portion (12) est centrée sur le fond (7) du récipient (1).

9. Procédé selon l'une quelconque des revendications précédentes **caractérisé en ce que** l'on fait coulisser l'organe mobile de retenue (9) à travers le fond (8) du moule (3a, 3b, 8).

10. Dispositif pour la fabrication de récipients (1) selon le procédé décrit dans l'une quelconque des revendications précédentes comprenant un moule (3a, 3b, 8) et des moyens de soufflage, le moule (3a, 3b, 8) étant dimensionné pour la fabrication de récipients (1) plus larges que haut ou vice-versa, le dispositif étant **caractérisé par le fait qu'**il comprend un organe mobile de retenue (9) disposé selon la direction de dimension la plus faible du moule (hauteur ou largeur) et des moyens de contrôle (10) de déplacement dudit organe mobile de retenue (9), p.ex. un système de vérins, qui sont adaptés de manière à assurer un contact quasi-simultané de la paroi latérale (6) et du fond (7) du récipient (1) avec les parois du moule (3a, 3b, 8).

11. Dispositif selon la revendication précédente **caractérisé en ce que** l'organe mobile de retenue (9) est monté coulissant à travers le fond (8) du moule (3a, 3b,8).

12. Dispositif selon la revendication précédente **caractérisé par le fait que** l'organe mobile de retenue (9) comprend une extrémité libre (13) destinée à contacter et retenir une portion (12) de la paroi latérale (6) ou du fond (7) d'un récipient (1).

13. Dispositif selon la revendication précédente dont le moule (3a, 3b, 8) est dimensionné pour la fabrication de récipients (1) plus larges que hauts, ladite extrémité libre (11) de l'organe mobile de retenue (9) étant adaptée pour contacter une portion (12) du fond d'un récipient (1) qui est centrée autour de son axe de symétrie.

14. Dispositif selon la revendication précédente dont le moule (3a, 3b, 8) est dimensionné pour la fabrication de récipients (1) avec un fond (7) présentant une portion convexe (12).

15. Dispositif selon la revendication précédente où la portion convexe (12) est adaptée pour loger la partie supérieure, typiquement le goulot (4) et le couvercle d'un autre récipient (1).

16. Dispositif selon l'une quelconque des revendications 10 à 15 **caractérisé par le fait que** l'organe mobile de retenue (9) se présente sous la forme d'une tige.

17. Dispositif selon l'une quelconque des revendications 10 à 16 **caractérisé en ce que** l'organe mobile de retenue (9) comprend un canal adapté pour laisser circuler de l'air sous pression.

## Claims

1. Method for manufacturing a thermoplastic container (1) by blow-moulding a preform (2) in a mould comprising a first half-shell (3a), a second half-shell (3b) and an end wall (8), said container (1) being wider than tall, or vice versa, and comprising a neck (4) on its upper face (5), a side wall (6) and an end wall (7), said method being **characterized in that,** during blowing, a movable retaining member (9) is used to control the expansion of the container (1) along its shortest direction (height or width), the expansion of the container (1) being controlled so that its side wall (6) and its end wall (7) come almost simultaneously into contact with the walls (3a, 3b, 8) of the mould.

2. Manufacturing method according to the preceding claim, in which a container (1) wider than tall is used.

3. Manufacturing method according to Claim 1 or 2, **characterized in that** the speed of displacement of the movable retaining member (9) as a function of the blow-moulding rate and of the geometry of the mould (3) is determined.

4. Manufacturing method according to any one of the preceding claims, **characterized in that** the displacement of the movable retaining member (9) is started when the blowing is initiated.

5. Manufacturing method according to any one of the preceding claims, **characterized in that,** prior to blowing, the movable retaining member (9) is in contact with the end wall of the preform (2).

6. Method according to the preceding claim, **characterized in that** the movable retaining member (9) is kept permanently in contact with the end wall of the preform (2) or of the container (1) throughout the duration of the blowing.

7. Manufacturing method according to any one of the preceding claims, **characterized in that** the movable retaining member (9) is brought into contact with a portion (12) of the end wall (7) of the container (1).

8. Method according to the preceding claim, **characterized in that** said portion (12) is centred on the end wall (7) of the container (1).

9. Method according to any one of the preceding claims, **characterized in that** the movable retaining member (9) is slid through the end wall (8) of the mould (3a, 3b, 8).

10. Device for manufacturing containers (1) according to the method described in any one of the preceding claims, comprising a mould (3a, 3b, 8) and blowing means, the mould (3a, 3b, 8) being designed for manufacturing containers (1) that are larger than tall, or vice versa, the device being **characterized in that** it comprises a movable retaining member (9) disposed along the shortest direction (height or width) of the mould and means (10) for controlling the displacement of said movable retaining member (9), for example a system of jacks, which are designed so as to ensure almost simultaneous contact of the side wall (6) and the end wall (7) of the container (1) with the walls (3a, 3b, 8) of the mould.

11. Device according to the preceding claim, **characterized in that** the movable retaining member (9) is mounted so as to slide through the end wall (8) of the mould (3a, 3b, 8).

12. Device according to the preceding claim, **characterized in that** the movable retaining member (9) has a free end (13) intended for contacting and retaining a portion (12) of the side wall (6) or of the end wall (7) of a container (1).

13. Device according to the preceding claim, the mould (3a, 3b, 8) of which is designed for manufacturing containers (1) that are wider than tall, said free end (11) of the movable retaining member (9) being suitable for contacting a portion (12) of the end wall of a container (1), said portion being centred about its axis of symmetry.

14. Device according to the preceding claim, the mould (3a, 3b, 8) of which is designed for manufacturing containers (1) with an end wall (7) having a convex portion (12).

15. Device according to the preceding claim, in which the convex portion (12) is suitable for housing the upper part, typically the neck (4) and the lid of another container (1).

16. Device according to any one of Claims 10 to 15, **characterized in that** the movable retaining member (9) takes the form of a rod.

17. Device according to any one of Claims 10 to 16, **characterized in that** the movable retaining member (9) includes a channel suitable for the flow of pressurized air.

## Patentansprüche

1. Verfahren zur Herstellung eines thermoplastischen Behälters (1) durch Blasformen eines Vorformlings (2) in einer Form mit einer ersten Halbschale (3a), einer zweiten Halbschale (3b) und einem Boden (8), wobei der Behälter (1) breiter als hoch ist oder umgekehrt und einen Hals (4) an seiner oberen Fläche (5), eine Seitenwand (6) und einen Boden (7) umfasst, **dadurch gekennzeichnet, dass** beim Blasformen ein bewegliches Halteelement (9) verwendet wird, um die Ausdehnung des Behälters (1) in der Richtung seiner kürzesten Strecke (Höhe oder Breite) zu steuern, wobei die Steuerung der Ausdehnung des Behälters (1) so erfolgt, dass seine Seitenwand (6) und sein Boden (7) die Wände der Form (3a, 3b, 8) praktisch gleichzeitig kontaktieren.

2. Herstellungsverfahren nach dem vorhergehenden Anspruch, wobei ein Behälter (1) verwendet wird, der breiter als hoch ist.

3. Herstellungsverfahren nach Anspruch 1 oder 2, **dadurch gekennzeichnet, dass** die Verschiebegeschwindigkeit des beweglichen Halteelements (9) in Abhängigkeit von der Blasformrate und der Geometrie der Form (3) bestimmt wird.

4. Herstellungsverfahren nach einem der vorhergehenden Ansprüche, **dadurch gekennzeichnet, dass** beim Beginn des Blasformens mit der Verschiebung des beweglichen Halteelements (9) begonnen wird.

5. Herstellungsverfahren nach einem der vorhergehenden Ansprüche, **dadurch gekennzeichnet, dass** das bewegliche Halteelement (9) vor dem Blasformen mit dem Boden des Vorformlings (2) in Kontakt ist.

6. Verfahren nach dem vorhergehenden Anspruch, **dadurch gekennzeichnet, dass** das bewegliche Halteelement (9) während der gesamten Dauer des Blasformens ständig mit dem Boden des Vorformlings (2) oder des Behälters (1) zusammengehalten wird.

7. Herstellungsverfahren nach einem der vorhergehenden Ansprüchen **dadurch gekennzeichnet, dass** das bewegliche Halteelement (9) mit einem Abschnitt (12) des Bodens (7) des Behälters (1) in Kontakt gebracht wird.

8. Verfahren nach dem vorhergehenden Anspruch, **dadurch gekennzeichnet, dass** der Abschnitt (12) auf dem Boden (7) des Behälters (1) zentriert ist.

9. Verfahren nach einem der vorhergehenden Ansprüche, **dadurch gekennzeichnet, dass** das bewegliche Halteelement (9) über den Boden (8) der Form (3a, 3b, 8) geschoben wird.

10. Vorrichtung zur Herstellung von Behältern (1) gemäß dem Verfahren nach einem der vorhergehenden Ansprüche, mit einer Form (3a, 3b, 8) und Blasformmitteln, wobei die Form (3a, 3b, 8) für die Herstellung von Behältern (1) bemessen ist, die breiter als hoch sind oder umgekehrt, **dadurch gekennzeichnet, dass** sie ein bewegliches Halteelement (9), das in der kürzesten Abmessungsrichtung der Form (Höhe oder Breite) angeordnet ist, und Mittel (10) zur Steuerung der Verschiebung des beweglichen Halteelements (9), z. B. ein Zylindersystem, umfasst, die so ausgelegt sind, dass sie einen praktisch gleichzeitigen Kontakt der Seitenwand (6) und des Bodens (7) des Behälters (1) mit den Wänden der Form (3a, 3b, 8) gewährleisten.

11. Vorrichtung nach dem vorhergehenden Anspruch, **dadurch gekennzeichnet, dass** das bewegliche Halteelement (9) so montiert ist, dass es über den Boden (8) der Form (3a, 3b, 8) gleitet.

12. Vorrichtung nach dem vorhergehenden Anspruch, **dadurch gekennzeichnet, dass** das bewegliche Halteelement (9) ein freies Ende (13) umfasst, das dazu bestimmt ist, einen Abschnitt (12) der Seitenwand (6) oder des Bodens (7) eines Behälters (1) zu kontaktieren und zu halten.

13. Vorrichtung nach dem vorhergehenden Anspruch, deren Form (3a, 3b, 8) für die Herstellung von Behältern (1), die breiter als hoch sind, bemessen ist, wobei das freie Ende (11) des beweglichen Halteelements (9) geeignet ist, einen Abschnitt (12) des Bodens eines Behälters (1) zu kontaktieren, der um seine Symmetrieachse zentriert ist.

14. Vorrichtung nach dem vorhergehenden Anspruch, deren Form (3a, 3b, 8) für die Herstellung von Behältern (1) mit einem Boden (7), der einen konvexen Abschnitt (12) aufweist, bemessen ist.

15. Vorrichtung nach dem vorhergehenden Anspruch, wobei der konvexe Abschnitt (12) geeignet ist, dass der obere Teil, üblicherweise der Hals (4) und der Deckel eines anderen Behälters (1), darin untergebracht werden kann.

16. Vorrichtung nach einem der Ansprüche 10 bis 15, **dadurch gekennzeichnet, dass** das bewegliche Halteelement (9) die Form einer Stange hat.

17. Vorrichtung nach einem der Ansprüche 10 bis 16, **dadurch gekennzeichnet, dass** das bewegliche Halteelement (9) einen Kanal umfasst, in dem Druckluft zirkulieren gelassen werden kann.
